(19) Europäisches Patentamt
European Patent Office
Office européen des brevets

(11) **EP 3 795 370 A1**

(12) **EUROPEAN PATENT APPLICATION**

(43) Date of publication:
24.03.2021 Bulletin 2021/12

(51) Int Cl.:
**B60B 19/00** (2006.01)

(21) Application number: **20197144.7**

(22) Date of filing: **21.09.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **19.09.2019 IT 201900016784**

(71) Applicant: **SPRINGA S.R.L.**
**20158 Milano (IT)**

(72) Inventors:
• TRIFONI, Alessandro
40139 Bologna (IT)
• CEVOLI, Davide
40013 Castel Maggiore (Bologna) (IT)
• FRANGI, Lorenzo
20825 Barlassina (Monza Brianza) (IT)

(74) Representative: **Lunati & Mazzoni S.r.L.**
**Via Carlo Pisacane, 36**
**20129 Milano (IT)**

(54) **OMNI-WHEEL DEVICE**

(57) An omni-wheel device (1) designed to allow the movement of a machine (10) according to the selected trajectories and comprising at least three wheels (2) that define a common main axis of rotation (2a) and centred with respect to said main axis of rotation (2a), in which each of the wheels (2) includes a similar base body (20) centred and rotating in relation to the main axis of rotation (2a) and defining a substantially circumferential perimeter profile (20a), and a plurality of similar rolling elements (21) arranged at the perimeter profile (20a) in such a way as to cover most of the perimeter profile (20a) and hinged to the base body (20) so that each of them defines its secondary axis of rotation (2b), substantially tangential with respect to the perimeter profile (20a), in which the rolling elements (21) define similar contact surfaces (210) along the secondary axis of rotation (2b) and are equally spaced from each other on the respective base bodies (20), and in which the wheels (2) are all offset from each other around the main axis of rotation (2a) in such a way that at least two contact surfaces (210) of the rolling elements (21) are always simultaneously in a resting position.

Fig. 1

## Description

This invention relates to an omni-wheel device of the type specified in the preamble to the first claim.

In particular, this invention relates to a handling device including elements rotating around a plurality of different axes of rotation.

As is well known, omni-wheel devices are included among the current state-of-the-art handling devices.

They basically include drive wheels defining a common main axis of rotation and comprising, each one, a base body, which is almost cylindrical, with an extension axis that is almost the same as the axis of rotation and designed to rotate around the same axis; and rolling elements idly hinged to the lateral surface of the base body so as to be placed between the body and the resting surface.

The rolling elements are, moreover, usually hinged to the base body and placed along at least one circumference almost concentric to the main axis of rotation and with idle axes of rotation lying on a substantially transverse plane and, in particular, almost perpendicular to the main axis of rotation.

The rolling elements are, therefore, rollers and, to be precise, conical or barrel-shaped rollers, basically staggered or placed side-by-side between one wheel and the next.

The wheels made in this way make it possible to substantially describe the trajectories that can be followed by a machine that uses such handling devices and, therefore, they are widely used where precision and stability are required in the face of very variable and angled handling paths.

The prior art described, however, comprises some major drawbacks.

In particular, today's omni-wheel devices, although highly performing, can often run into problems with skidding, especially when the trajectories described have sudden direction changes, with very sharp angles, and when the ground, on which the devices move, shows more or less significant roughness.

Therefore, although such devices allow more complex handling trajectories to be followed than with the common single-wheel systems, they may be limited in their movements if they are mounted, for example, on high-precision machinery.

Even the slightest slip can lead to very high machining errors for a machine that is driven entirely by omni-wheel systems. These drawbacks are of considerable importance when omni-wheel devices are mounted on top of machine tools, for example, those designed to machine the surface on which the machine moves. In this case, in fact, any machining scraps or residues can hinder the handling of omni-wheel devices, increasing the possibility of their slipping and reducing the efficiency of the machine.

In this situation, the technical task underlying this invention is to devise an omni-wheel device capable of substantially overcoming at least part of the above-mentioned drawbacks.

In the context of said technical task, it is an important purpose of the invention to obtain an omni-wheel device that can significantly increase the handling stability, for example of the machine on which it is installed, on discontinuous surfaces and complex paths.

Another important purpose of the invention is to devise an omni-wheel device that eliminates or significantly reduces the slipping effect that is found with common omni-wheels in the current state of the art.

The technical task and specified purposes are achieved with an omni-wheel device as claimed in the appended claim 1.

Preferred technical solutions are set forth in the dependent claims.

The features and advantages of the invention will be apparent from the detailed description of preferred embodiments of the invention, with reference to the accompanying drawings, in which:

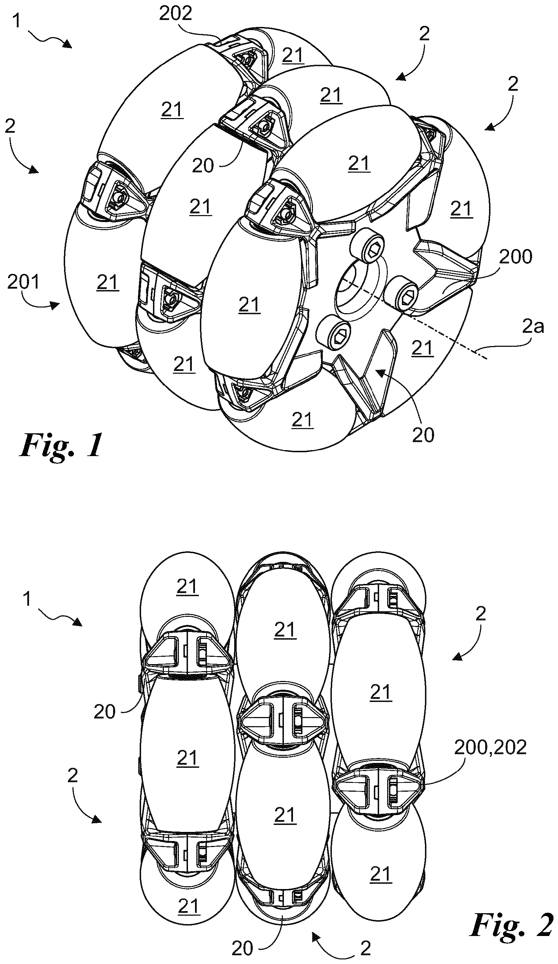

> **Fig. 1** shows a perspective view of an omni-wheel device according to the invention;
> **Fig. 2** is a front view of an omni-wheel device according to the invention;
> **Fig. 3** is a side view of an omni-wheel device according to the invention; and
> **Fig. 4** is a front view in section of an omni-wheel device according to the invention; and
> **Fig. 5** represents a machine tool comprising conventional omni-wheels.

In this document, the measures, values, shapes, and geometric references (such as perpendicularity and parallelism), when used with words like "about" or other similar terms such as "approximately" or "substantially", are to be understood as except for measurement errors or inaccuracies due to production and/or manufacturing errors and, above all, except for a slight divergence from the value, measure, shape or geometric reference with which it is associated. For example, if associated with a value, such terms preferably indicate a divergence of no more than 10% from the value itself.

Furthermore, when terms such as "first", "second", "upper", "lower", "main" and "secondary" are used, they do not necessarily identify an order, relationship priority or relative position, but they can simply be used to distinguish different components more clearly from one another.

Unless otherwise stated, the measurements and data reported in this text shall be considered as performed in International Standard Atmosphere ICAO (ISO 2533:1975).

With reference to the figures, the omni-wheel device according to the invention is globally denoted with the number **1.**

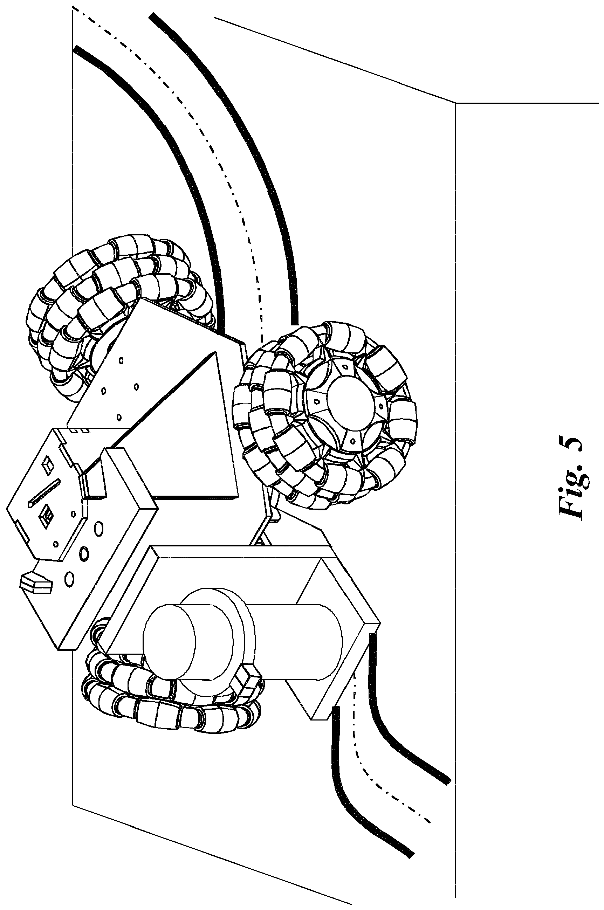

The device 1 is preferably designed for handling a machine. In particular, this machine can be a means of transport or a machine tool or something else, as long as it is designed to be handled with the device 1. In particular, the device 1 is included in a machine tool that machines the same surface on which it moves. Such a machine is illustrated in Fig. 5, but with a conventional omni-wheel.

For example, the device 1 can be installed on a machine as described by pg. 4, l. 5, to pg. 9, l. 3, of the patent application WO-A-2016051342 included here by way of reference.

In general, the machine is preferably designed to be handled by the device 1 according to chosen trajectories. In order to describe trajectories of various types, it is preferable, but not necessary for the machine to comprise at least three devices 1 according to the invention.

The device 1 preferably comprises a plurality of wheels **2.**

There are at least two wheels 2 within the device 1. Conveniently, there should be at least three wheels 2.

In addition, the wheels 2 are preferably placed side-by-side so as to create a sequence of wheels 2. Each of the wheels 2 preferably defines an axis of rotation **2a.**

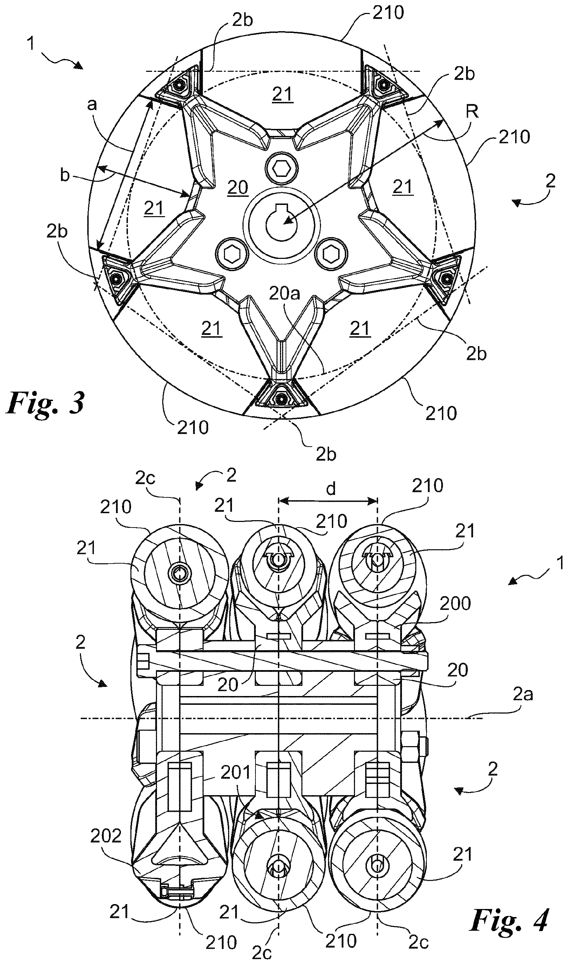

The axis of rotation 2a is basically the axis passing through the centre of the wheel 2. Usually, each wheel 2 can house a pin at the axis of rotation 2a, as shown in Fig. 4, to enable the wheel 2 to rotate.

The wheels 2, in particular, define a common axis of rotation 2a. They are, therefore, all centred in relation to the main axis of rotation 2a.

In addition, the wheels 2 preferably define the same shapes and sizes and have the same components.

Each wheel 2 preferably defines a rotation plane **2c.**

The rotation plane 2c is basically the plane within which each wheel 2 moves. In particular, each wheel 2 that rolls around the main axis of rotation 2a describes movements that remain within the rotation plane 2c. The wheels 2 define distances **d,** therefore, between them that are basically defined by the distances between the rotation planes 2b.

Specifically, each wheel preferably comprises a similar base body **20** and a plurality of similar rolling elements **21.**

The base body 20 is, preferably, centred and rotating in relation to the main axis of rotation 2a. The base body 20 basically defines the frame or support of the wheel 2. The base body 20 mainly, but not exclusively, extends along the rotation plane 2c. It preferably defines a basically disc-like outline or shape. In addition, it defines an edge 200. The edge 200 is preferably the portion of the base body 20 arranged at the ends in relation to the axis of rotation 2a, of the base body 20 on the rotation plane 2c.

The base body 20 comprises, therefore, housings 201. The housings 201 are preferably cavities or grooves made along the edge 200. The housings 201 are preferably designed to house the rolling elements 21.

In addition, the base body 20 defines a perimeter profile **20a.**

The perimeter profile 20a is, preferably, basically circumferential. In particular, the perimeter profile 20a extends along the edge 200 of the base body 20. In addition, the rolling elements 21 of each wheel 2 are preferably attached to the base body at the perimeter profile 20a.

The perimeter profile 20a is, ideally, a circumferential trajectory that runs across the base body along the edge 200 and the housings 201 preferably on the rotation plane 2c.

In particular, the perimeter profile 20a defines the trajectory along which the rolling elements 21 are, tangentially, arranged.

All the rolling elements 21 on the same wheel 2 and on the other wheels 2 are preferably similar to each other.

Even more specifically, they are arranged on the perimeter profile 20a so that they cover the majority of the perimeter profile 20a itself.

This last sentence means that the rolling elements 21 are arranged on the base body 20 so that they are not very distanced from each other.

The distance between each rolling element 21 is defined, in particular, by the distance between each housing 201. Below, the geometric features of each housing 201 and rolling element 21 will be described in more detail.

In any case, each of the rolling elements 21 of the same wheel 2 is preferably hinged to the base body 20 so that each defines its own secondary axis of rotation 2b. The secondary axis of rotation 2b is preferably perpendicular to the main axis of rotation 2a. Even more specifically, preferably, the secondary axis of rotation 2b is basically tangential to the perimeter profile 20a.

In addition, each secondary axis of rotation 2b is preferably arranged along the rotation plane 2c.

In this way, each wheel 2 comprises rolling elements 21 that can be rotated along at least two different directions determined by the secondary axes of rotation 2b.

The rolling elements 21 each define, therefore, a contact surface **210.**

The contact surface 210 is preferably the portion of rolling element 21 designed to come into contact with the ground or with a plane on which the device 1 moves.

Of course, since the rolling elements 21 can be rotated, the contact surface 210 abstractly coincides with the lateral surface portion of the rolling element 21 that is, at a defined point in time, in contact with the ground.

In particular, the contact surface 210 extends parallel to the secondary axis of rotation 2b.

Of course, the contact surface 210 can be extended as a flat surface that extends straight and parallel to the secondary axis of rotation 2b and around it, or can also define curves.

For example, the rolling elements 21 can be cylinders hinged to the edge 200 of the base body 20, arranged inside the housings 201, and centred in relation to the secondary axis of rotation 2b and, in this case, part of the lateral surface of the cylinders defines each contact surface 210. Or, preferably, the rolling elements 21 define a basically barrel shape.

In addition, the rolling elements 21 are equally spaced from each other, when adjacent, on the base body 20.

Advantageously, the wheels 2 are all offset from each other around the main axis of rotation 2a. In this way, at least two of the contact surfaces 210 of the rolling elements are always simultaneously in a resting position.

Even more specifically, the offsetting can be defined based on the extension of each rolling element 21 or in relation to other parameters.

Below, a plurality of parameters, defined in linear and angular terms, on the rotation plane 2c or in relation to it, are defined, so as to determine the geometric features of the rolling elements 21 and of the base body 20.

First of all, each rolling element 21 defines an extension a.

The extension a is preferably the length of the rolling element 21 along the secondary axis of rotation 2b.

The extension a of each rolling element 21 can be empirically determined in relation to the dimensions of the base body 20 and to the quantity of rolling elements 21. The wheels 2 are, therefore, when adjacent, offset from each other around the main axis of rotation 2a in such a way that the respective rolling elements 21 placed side-by-side are staggered by an angular displacement α.

The angular displacement α preferably depends above all on the number of base bodies 20 and rolling elements that compose the wheel 2.

In particular, the angular displacement α preferably also depends on the simultaneous resting points that are supposed to be created with the wheel 2. The angular displacement α is preferably determined from the following expression, where **N** is the number of base bodies 20 of the wheel 2, **n** is the number of rolling elements 21 for the solid body 20, and c is the minimum number of contact surfaces 210 of the wheel 2 in a resting position on the ground at the same time.

$$\alpha = \frac{360°}{N*n*c}$$

Of course, the rolling elements 21 placed side-by-side could be staggered according to other criteria as long as they are designed to enable two distinct contact points of the wheel 2 to rest at the same time.

There can be any number of rolling elements 21 on the wheels 2. However, each wheel preferably includes the same number of rolling elements 21. In particular, in one preferred embodiment, each wheel 2 includes five rolling elements 21.

In terms of dimensions, each of the wheels 2 preferably defines a radius **R.**

The radius R is preferably the radius of the wheel 2 as assembled, i.e. regarding the extension given both by the base body 20 and by the rolling elements 21.

All the wheels 2 preferably have the same radius R. In addition, the radius R defines a predetermined relation with the extension.

Preferably, in fact, the extension a can be determined using the following expression:

$$a = 4 * R * \sin\left(\frac{360°}{N*n}\right)$$

In particular, in one preferred embodiment, the radius R and the extension a can define a ratio, between them, between 1 and 1.5. This means that, basically, the rolling elements 21 preferably extend for approximately a distance similar to the radius R.

In addition, the rolling elements 21, preferably barrel-shaped, define a maximum radial thickness **b.**

The maximum radial thickness b basically, preferably, coincides with the diameter of the same section. Basically, therefore, the maximum radial thickness b defines the maximum radial extension of the rolling elements 21.

The maximum radial thickness b is preferably defined perpendicularly to the secondary axis of rotation 2b. In addition, it is preferably extended to the point that the radius R defines with it a ratio between 1.5 and 2.5.

In the preferred embodiment, therefore, the radius R is approximately double the extension of the maximum radial thickness b.

The distance d between the rotation planes 2b also, preferably, depends on the maximum radial thickness b. In particular, the base bodies 20 are preferably distanced between them so that the rotation planes 2b define reciprocal distances d that are greater than the maximum radial thickness b. In this way, the rolling elements 21 cannot collide along the main axis of rotation 2a.

The housings 201 are also preferably regularly staggered on the edge 200 of the base body 20 in relation to the extension of the rolling elements 21.

Basically, the rolling elements 21 are mutually separated by separators 202. These separators 202 are preferably edge 200 portions that are basically triangular in shape. In particular, the angular dimensions of the separators 202 also depend on the dimensions of the base bodies 20 of the rolling elements 21.

In any case, the rolling elements 21 are preferably squat, solid bodies. Specifically, their shape is such that the maximum radial thickness b preferably has an extension between 50% and 70% of the extension a.

In conclusion, the rolling elements 21 are attached to the base body 20 in such a way that, in each of the wheels 2, the secondary axes of rotation 2b are perpendicular to the radius R and arranged at a distance from the centre of the wheel 2 between 70% and 80% of the radius R.

In a preferred embodiment, for example, the device may comprise three wheels 2, each including five rolling elements 21.

In addition, the wheel 2, including the base body 20 and the rolling elements 21, can define a radius of 5 cm.

Each of the rolling elements 21 can, therefore, be arranged on the base body 20 in such a way that the rolling elements 21 are staggered apart, on the same base body 20 in relation to the rotation plane 2c, by 72°.

In addition, the rolling elements 21 are staggered, compared to the rolling elements of the adjacent wheel 2, in relation to a plane parallel to the rotation planes 2b, by 12°.

In addition, each secondary axis of rotation 2b can cut the radius R at a distance equal to 3.7 cm.

Each rolling element 21 can, therefore, extend for an extension equal to approximately 4.2 cm and define a maximum radial thickness b equal to approximately 2.5 cm.

The wheels 2 can, therefore, be reciprocally attached in such a way as to be brought closer without impeding the handling of the rolling elements 21, avoiding their coming into contact with parts that may generate friction and reduce handling capacity. In particular, the distance between the wheels 2 is defined, as mentioned above, by the distance d parameter.

The operation of the omni-wheel device 1 previously described in structural terms is similar to that of each omni-wheel device.

In any case, the device 1, according to the invention, entails important advantages. In fact, the device 1 enables a significant increase in the stability on discontinuous surfaces of any machine that mounts the device 1.

In particular, the device 1 reduces the effects of slipping and offsetting of the rolling elements 21 and makes it possible to always keep at least two points of contact with the ground or with the machining surface.

This aspect is especially desirable in cases where the device 1 is designed to handle a machine tool that machines the same plane on which it moves.

In this case, any holes, roughness, or scraps present on the handling surface will not cause the device to slip, since the device is always resting on the surface on at least two contact surfaces 210 and cannot, therefore, slip due, for example, to the inclination of the wheels 2.

The invention is susceptible to variations falling within the scope of the inventive concept defined by the claims.

For example, the rolling elements 21 could have different shapes, or there could me more than three wheels 2.

Of course, especially in the latter case, it might be appropriate to increase the number of rolling elements 21 by varying, for example, the ratio between the extension a and the radius R in relation to the preferred embodiment previously identified.

In this context, all details can be replaced by equivalent elements, and the materials, shapes, and dimensions may be any materials, shapes, and dimensions.

**Claims**

1. An omni-wheel device (1) designed to allow the movement of a machine according to the selected trajectories and comprising at least three wheels (2) that define a common main axis of rotation (2a) and centred with respect to said main axis of rotation (2a),

   - each of said wheels (2) including:

     - a similar base body (20) centred and rotating in relation to said main axis of rotation (2a) and defining a substantially circumferential perimeter profile (20a), and
     - a plurality of similar rolling elements (21) arranged at said perimeter profile (20a) in such a way as to cover most of said perimeter profile (20a) and hinged to said base body (20) so that each of them defines its secondary axis of rotation (2b), substantially tangential with respect to said perimeter profile (20a),

   - said rolling elements (21) defining similar contact surfaces (210) along said secondary axis of rotation (2b) and being equally spaced from each other, when adjacent, on said respective base bodies (20),

   and said device (1) being **characterised in that**

     - said wheels (2) are all offset from each other around said main axis of rotation (2a) in such a way that at least two of said contact surfaces (210) of said rolling elements (21) are always simultaneously in a resting position.

2. The device (1) according to claim 1, in which each of said rolling elements (21) defines an angular displacement ($\alpha$) with respect to said rolling elements (21) of one said adjacent wheel and said angular displacement is determined in relation to the number (N) of said base bodies (20), to the number (n) of said rolling elements (21) on each of said base bodies (20) and to the number (c) of contact surfaces (210) resting simultaneously on the ground.

3. The device (1) according to at least one previous claim, in which said angular displacement ($\alpha$) is determined from the following relation: $\alpha=(360°)/(N*n*c)$.

4. The device (1) according to at least one previous claim, in which each of said wheels (2) includes five said rolling elements (211).

5. The device (1) according to at least one previous claim, in which said rolling elements (21) define a barrel shape.

6. The device (1) according to at least one previous claim, in which said wheels (2) all define the same radius (22) and said radius (R) defines with said extension (a) a ratio between 1 and 1.5.

7. The device (1) according to at least one previous claim, in which said rolling elements (21) define a maximum radial thickness (b) in a direction perpendicular to said secondary axis of rotation (2b) and said radius (R) defines with said maximum radial thickness (b) a ratio between 1.5 and 2.5.

8. The device (1) according to at least one previous claim, in which said maximum radial thickness (b) has an extension between 50% and 70% of said extension (a).

9. The device (1) according to at least one previous claim, in which, in each of said wheels (2), said secondary axes of rotation (2b) are perpendicular to said radius (R) and arranged at a distance from the centre of said wheel (2) between 70% and 80% of said radius (R).

10. A machine (10) comprising at least three devices (1) according to at least one previous claim, said machine being a machine tool working on the same surface on which it moves.

*Fig. 1*

*Fig. 2*

*Fig. 3*

*Fig. 4*

Fig. 5

Europäisches Patentamt
European Patent Office
Office européen des brevets

# EUROPEAN SEARCH REPORT

Application Number

EP 20 19 7144

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 7 566 102 B2 (INNOWHEEL PTY LTD [AU]) 28 July 2009 (2009-07-28) | 1-9 | INV. B60B19/00 |
| Y | * column 18, lines 37-50; figures 27a,27c * | 10 | |
| Y,D | WO 2016/051342 A1 (FRANGI LORENZO [IT]; CEVOLI DAVIDE [IT]; TRIFONI ALESSANDRO [IT]) 7 April 2016 (2016-04-07) | 10 | |
| A | * figure 1 * | 1-9 | |

TECHNICAL FIELDS SEARCHED (IPC)

B60B

The present search report has been drawn up for all claims

| Place of search | Date of completion of the search | Examiner |
|---|---|---|
| Munich | 15 October 2020 | Landriscina, V |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 19 7144

This annex lists the patent family members relating to the patent documents cited in the above-mentioned European search report.
The members are as contained in the European Patent Office EDP file on
The European Patent Office is in no way liable for these particulars which are merely given for the purpose of information.

15-10-2020

| Patent document cited in search report | | Publication date | Patent family member(s) | | Publication date |
|---|---|---|---|---|---|
| US 7566102 | B2 | 28-07-2009 | NONE | | |
| WO 2016051342 | A1 | 07-04-2016 | EP 3200953 | A1 | 09-08-2017 |
| | | | US 2017239768 | A1 | 24-08-2017 |
| | | | WO 2016051342 | A1 | 07-04-2016 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016051342 A